# EUROPÄISCHE PATENTSCHRIFT

(11) **EP 4 520 573 B1**
(45) Veröffentlichungstag und Bekanntmachung des Hinweises auf die Patenterteilung: **18.03.2026**
(21) Anmeldenummer: 23196460.2
(22) Anmeldetag: 11.09.2023
(51) Int. Cl.: B60L 1/00, B60L 50/40, B60L 58/10, B61C 3/02, H02J 1/08, H02J 7/14, H02J 7/34

(54) **SCHIENENFAHRZEUG UMFASSEND EINE TRAKTIONSBATTERIE UND EINEN STROMRICHTER SOWIE VERFAHREN ZUM EINSCHALTEN EINES SCHIENENFAHRZEUGES**
RAIL VEHICLE COMPRISING A TRACTION BATTERY AND A CONVERTER AND METHOD FOR SWITCHING ON A RAIL VEHICLE
VÉHICULE FERROVIAIRE COMPRENANT UNE BATTERIE DE TRACTION ET UN CONVERTISSEUR DE COURANT AINSI QUE PROCÉDÉ DE MISE EN MARCHE D'UN VÉHICULE FERROVIAIRE

(43) Veröffentlichungstag der Anmeldung: 12.03.2025
(73) Patentinhaber: Stadler Rail AG, 9565 Bussnang (CH)
(72) Erfinder: Falke, Ewald, 900 St. Gallen (CH)
(74) Vertreter: Hepp Wenger Ryffel AG

(56) Entgegenhaltungen:
- EP-A1- 3 705 336
- DE-A1- 102014 219 641
- DE-A1- 102014 224 922
- DE-A1- 102021 201 828
- US-A1- 2016 185 224
- US-B2- 9 731 616

## Beschreibung

Die Erfindung betrifft ein Schienenfahrzeug umfassend eine Traktionsbatterie und einen Stromrichter sowie ein Verfahren zum Einschalten eines Schienenfahrzeuges.

Aus dem Stand der Technik sind angetriebene Schienenfahrzeuge mit einem Traktionssystem und einer Kleinspannungsebene bekannt. Die Kleinspannungsebene dient zur Versorgung der Fahrzeugleittechnik und anderen Kleinleistungsverbrauchern. In den bekannten Schienenfahrzeugen werden diese Verbraucher aus einer Kombination einer Kleinspannungsbatterie und einem Ladegerät gespeist. Für ein solches Ladegerät muss ein adäquater Raum im Fahrzeug vorgehalten werden. Auch der Einbau einer separaten Kleinspannungsbatterie ist komplex. Kleinleistungsbatterien in Schienenfahrzeugen umfassen Blei und/oder Nickel-Cadmium.

Diese Batterien müssen in einem speziellen Raum angeordnet werden, der vom Rest des Schienenfahrzeugs unabhängig belüftet und explosionsgeschützt ausgeführt ist. Ein solcher Raum ist technisch aufwändig und beansprucht einen grossen Bauraum. Ausserdem weisen solche Batterien ein hohes Gewicht auf und tragen deswegen erheblich zum Gewicht des Fahrzeugs bei. Besonders bei Fahrzeugen, welche schon eine Traktionsbatterie umfassen, steht das Anordnen einer zusätzlichen Batterie in Konflikt mit der maximal erlaubten Radlast bzw. einem maximal zulässigen Gewicht des Schienenfahrzeugs.

US 9 731 616 B2 beschreibt ein angetriebenes Schienenfahrzeugsystem welches gleichzeitig Energiespeicher mit unterschiedlichen Eigenschaften nutzen kann.

US 2016/185224 A1 beschreibt ein Schienenfahrzeug, welches eine Steuerung und eine Stromversorgung von peripheren Systemen bereitstellt, welche im Falle eines Kommunikationsausfalls die Steuerung der peripheren Systeme ermöglicht.

DE 10 2014 219641 A1 beschreibt eine Steuerungseinrichtung für ein Bordnetz eines Schienenfahrzeugs, wobei eine elektrische Spannungsversorgung eines elektrischen Hilfsbetrieb mittels einer Umschalteinrichtung von einer Spannungsquellen auf eine andere Spannungsquelle umgeschaltet werden kann.

Es ist daher die Aufgabe der Erfindung ein Verfahren zum Einschalten eines Schienenfahrzeuges zu schaffen, welche die Nachteile des Standes der Technik überwindet und es insbesondere ermöglicht, unkompliziert und gewichtssparend eine Kleinspannungsebene eines Schienenfahrzeuges mit dem elektrischen Strom zu versorgen.

Die Aufgabe wird durch ein Verfahren zum Einschalten eines Schienenfahrzeuges gemäss dem unabhängigen Anspruch gelöst.

Insbesondere wird die Aufgabe durch ein Verfahren zum Einschalten eines Schienenfahrzeuges nach Anspruch 1 gelöst.

Durch einen solchen Fahrzeugspannungswandler ist es möglich, die Fahrzeugleittechnik und das Fahrzeugsystem aus der Traktionsbatterie mit einer Spannung zu beaufschlagen, auch wenn der Stromrichter noch nicht in Betrieb ist. Somit ist es durch diese Anordnung möglich, dass System des Schienenfahrzeugs durch Energie der Traktionsbatterie hochzufahren. Somit muss für das System des Schienenfahrzeugs und die Fahrzeugleittechnik keine separate Batterie zur Verfügung gestellt werden und das Schienenfahrzeug kann einfach und gewichtssparend ausgebildet werden. Die Traktionsbatterie ist elektrisch mit dem DC-Bordnetz verbunden.

Es ist möglich, dass zwischen der Traktionsbatterie und dem Stromrichter ein Traktionsbatteriespannungswandler ausgebildet ist.

Eine derartige Anordnung ermöglicht das Versorgen des DC-Bordnetzes aus der Traktionsbatterie. Somit muss für das DC-Bordnetz keine zusätzliche Batterie mitgeführt werden und das Schienenfahrzeug kann einfach und gewichts- sowie platzsparend konstruiert werden.

Es ist möglich, dass das DC-Bordnetz eine Spannung im Bereich von 24 bis 110 V aufweist.

Durch eine solche Spannung kann das System des Schienenfahrzeugs sowie die Fahrzeugleittechnik sicher und zuverlässig betrieben werden.

Es ist möglich, dass der Stromrichterspannungswandler im Stromrichter integriert ist.

Durch eine derartige Anordnung des Stromrichters und des Stromrichterspannungswandlers ist es möglich, die Bauteile kompakt und platzsparend in dem Schienenfahrzeug anzuordnen. Somit bleibt ausreichend Raum für Passagiere oder für weitere technische Einrichtungen.

Der Stromrichterspannungswandler und der Stromrichter können in einem gemeinsamen Gehäuse angeordnet sein und/oder in einem gemeinsamen Abteil des Schienenfahrzeugs angeordnet sein.

Es ist möglich, dass ein Hilfsbetriebeumrichter mit dem Stromrichter verbunden ist.

Durch einen solchen Hilfsbetriebeumrichter ist es möglich, Hilfsbetriebe mit einer für den Betrieb der Hilfsbetriebe notwendigen Spannung zu beaufschlagen. Dadurch können die Hilfsbetriebe sicher und effizient betrieben werden.

Es ist möglich, dass der Hilfsbetriebeumrichter in dem Stromrichter integriert ist. Dies bedeutet, dass der Hilfsbetriebeumrichter im selben Gehäuse oder zumindest in der Nähe des Stromrichters angeordnet ist. Es ist möglich, dass sowohl der Stromrichterspannungswandler als auch der Hilfsbetriebeumrichter in dem Stromrichter integriert sind. Dann sind der Stromrichter, der Stromrichterspannungswandler und der Hilfsbetriebeumrichter in einem Gehäuse oder zumindest in einem entsprechenden Abteil eines Schienenfahrzeuges angeordnet. Auf diese Weise sind die Bauteile kompakt in einem Gehäuse oder in einem Technikabteil angeordnet und es ist ausreichend Platz in dem Schienenfahrzeug für die Passagiere oder für die weitere technische Ausrüstung vorhanden.

Es ist möglich, dass der Hilfsbetriebeumrichter für Kleinleistungsverbraucher einen Dreiphasenwechselstrom zur Verfügung stellt. Der Dreiphasenwechselstrom kann eine Spannung von 400 V und eine Frequenz von 50 Hertz aufweisen. Es ist möglich, dass der Hilfsbetriebeumrichter über eine externe Stromquelle versorgbar ist. Die externe Stromquelle kann den Hilfsbetriebeumrichter mit einer Spannung von 400 V und einer Frequenz von 50 Hertz versorgen. So kann das Schienenfahrzeug beispielsweise in einer Werkstatt mit dem elektrischen Strom versorgt werden und die Hilfsbetriebe können so betrieben werden.

Es ist möglich, dass das Schienenfahrzeug SuperCaps (Superkondensatoren) umfasst, die so ausgebildet sind, dass sie Energie im Schienenfahrzeug puffern können. Die Energie kann von den SuperCaps für Notfallverbraucher und/oder für Umschaltvorgänge gepuffert werden. Es ist möglich, dass in dem Schienenfahrzeug mehrere SuperCaps als Energiepuffer ausgebildet sind.

Die Verbraucher, welche mit den SuperCaps elektrisch verbunden sind, können somit auch bei Umschaltvorgängen durchgängig und ohne ein Störungsrisiko betrieben werden.

Bei dem Einschalten des Schienenfahrzeugs versorgt zunächst der Fahrzeugspannungswandler das DC-Bordnetz mit Energie aus der Traktionsbatterie, bevor der Stromrichter aktiviert wird.

Durch ein solches Verfahren ist es möglich, dass DC-Bordnetz mit dem elektrischen Strom zu beaufschlagen, ohne dass dafür eine andere Spannungsquelle als die Traktionsbatterie notwendig ist.

Der Stromrichter wird über den Stromrichterspannungswandler aus dem DC-Bordnetz aktiviert.

Dadurch kann der Stromrichter unkompliziert über das bestehende DC-Bordnetz aktiviert werden und es sind keine zusätzlichen technischen Einrichtungen notwendig.

Es ist möglich, dass nach Aktivierung des Stromrichters der Stromrichter direkt aus der Traktionsbatterie mit Energie versorgt wird.

Direkt bedeutet, dass der Stromrichter aus der Traktionsbatterie mit Energie versorgt wird, ohne dass sich zwischen dem Stromrichter und der Traktionsbatterie wesentliche elektrische Bauteile ausser elektrische Leitungen befinden. Auf diese Weise ist wird eine unkomplizierte und direkte Energieversorgung des Stromrichters aus der Traktionsbatterie gewährleistet.

Es ist möglich, dass nach der Aktivierung des Stromrichters das DC-Bordnetz über den Stromrichter sowie die Traktionsbatterie mit Energie versorgt wird.

Dadurch wird das DC-Bordnetz unkompliziert und zuverlässig mit Energie versorgt.

Ein Traktionsbatteriespannungswandler kann zwischen der Traktionsbatterie und dem Fahrzeugspannungswandler angeordnet sein. Der Traktionsbatteriespannungswandler kann elektrisch mit dem Fahrzeugspannungswandler, der Traktionsbatterie und dem Batteriemanagementsystem verbunden sein. Es ist möglich, dass der Fahrzeugspannungswandler mittels elektrischer Energie aus der Traktionsbatterie über den Traktionsbatteriespannungswandler hochgefahren wird.

Der Traktionsbatteriespannungswandler kann mit einer Leistung von 250W betreibbar sein. Der Fahrzeugspannungswandler kann mit einer Leistung von 2kW betreibbar sein. Der Fahrzeugspannungswandler kann mit einer Leistung betreibbar sein, die 4- bis 12-mal so gross ist wie die Leistung, mit der der Traktionsbatteriespannungswandler betreibbar ist. Es ist möglich, dass der Fahrzeugspannungswandler mit einer Leistung betreibbar ist, die 6- bis 10- mal so gross ist die die Leistung, mit der der Traktionsbatteriespannungswandler betreibbar ist.

Es ist möglich, dass bei der Versorgung des Stromrichters aus der Traktionsbatterie der Fahrzeugspannungswandler in einen hot-standby-Betrieb geschaltet wird.

Im hot-standby-Betrieb kann der Fahrzeugspannungswandler innerhalb kurzer Zeit ohne ein aufwändiges Hochfahren das DC-Bordnetz mit dem elektrischen Strom versorgen. Falls der Stromrichter ausfällt, kann die Versorgung des DC-Bordnetztes unterbrechungsfrei von dem im hot-standby befindliche Fahrzeugspannungswandler übernommen werden. Dadurch ist ein sicherer Betrieb des Schienenfahrzeugs möglich.

So kann das Schienenfahrzeug, nachdem der Stromrichter hochgefahren wurde, energieeffizient und sparsam betrieben werden.

Es ist möglich, dass der Einschaltvorgang des Schienenfahrzeugs durch ein Batteriemanagementsystem gesteuert wird.

Durch eine zentrale Steuerung des Einschaltvorgangs kann der Einschaltvorgang des Schienenfahrzeugs störungsfrei durchgeführt werden und das Batteriemanagementsystem kann bei einem Defekt einfach und zentral repariert werden.

Es ist möglich, dass einer, mehrere oder sämtliche der vorhergehend dargestellten Verfahrensschritte durch das Batteriemanagementsystem gestartet und/oder durchgeführt werden.

Es ist möglich, dass das Batteriemanagementsystem mit von der Traktionsbatterie bereitgestellten Energie hochgefahren wird.

Das Batteriemanagementsystem kann mit Energie hochgefahren werden, die von der Traktionsbatterie über den Traktionsbatteriespannungswandler bereitgestellt wird.

Durch ein Hochfahren des Batteriemanagementsystems mit von der Traktionsbatterie bereitgestellten Energie ist keine zusätzliche Batterie nötig. Dadurch kann das Schienenfahrzeug technisch einfach aufgebaut werden.

Es ist möglich, dass der Fahrzeugspannungswandler während des Startvorgangs über den Traktionsbatteriespannungswandler mit einer Spannung von 24 - 110V versorgt wird.

Das Netz zwischen dem Traktionsbatteriespannungswandler und dem Fahrzeugspannungswandler sowie das Netz zwischen dem Traktionsbatteriespannungswandler und dem Stromrichter weist im Normalbetrieb nach dem Hochfahren des Systems bevorzugt eine Spannung von 700-950V auf.

Die Erfindung wird in den folgenden Figuren näher erläutert. Hierbei zeigt:
- Figur 1:: Ein Schienenfahrzeug mit einem Schienenfahrzeugwagen, welcher eine Traktionsbatterie und einen Stromrichter aufweist,
- Figur 2:: ein Schienenfahrzeug mit zwei Schienenfahrzeugwagen,
- Figur 3:: ein Verfahren zum Hochfahren eines Schienenfahrzeugs,
- Figur 4:: eine Detailabbildung eines Stromrichters sowie einer Traktionsbatterie.

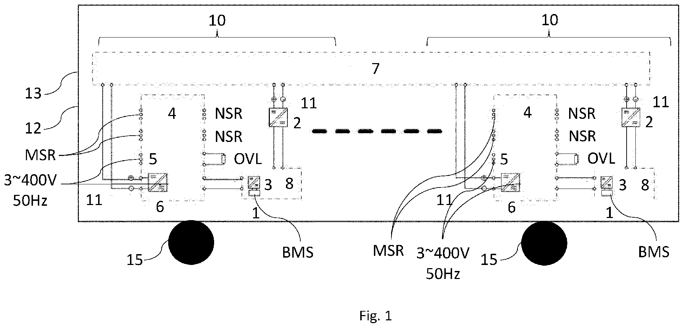

Die Figur 1 zeigt ein Schienenfahrzeug 12 mit einem Schienenfahrzeugwagen 13. Der Schienenfahrzeugwagen 13 weist mehrere Räder 15 auf. Der Schienenfahrzeugwagen 13 weist zwei Traktionssysteme 10 auf. Die beiden Traktionssysteme 10 sind an das DC-Bordnetz 7 angeschlossen. Das DC-Bordnetz 7 weist eine Spannung zwischen 24 und 110 V auf. Die Traktionssysteme 10 sind identisch ausgebildet. Die Traktionssysteme 10 weisen einen Stromrichterspannungswandler 6 sowie ein Fahrzeugspannungswandler 2 auf. Sowohl der Stromrichterspannungswandler 6 als auch der Fahrzeugspannungswandler 2 sind mit einem 24 V bis 110 V DC-Output ausgestattet. Der Fahrzeugspannungswandler 2 sowie der Stromrichterspannungswandler 6 sind jeweils über den 24 V bis 110 V DC-Output 11 mit dem DC-Bordnetz 7 verbunden. Der Fahrzeugspannungswandler 2 ist elektrisch mit der Traktionsbatterie 8 verbunden. Die Traktionsbatterie 8 ist mit einem Batteriemanagementsystem 1 ausgestattet. Der Stromrichter 4 ist elektrisch direkt mit der Traktionsbatterie 8 verbunden. Ausserdem weist der Stromrichter 4 einen Hilfsbetriebeumrichter 5 auf. Der Hilfsbetriebeumrichter 5 stellt für Kleinleistungsverbraucher (nicht dargestellt) einen Dreiphasenwechselstrom zur Verfügung. Der Dreiphasenwechselstrom des Hilfsbetriebeumrichters 5 weist eine Spannung von 400 V und eine Frequenz von 50 Hertz auf. In diesem Fall besteht das Schienenfahrzeug 12 aus einem Schienenfahrzeugwagen 13. Es ist möglich, dass in einem Schienenfahrzeugwagen 13 nur ein Traktionssystem 10 ausgebildet ist, oder dass mehrere Traktionssysteme 10 ausgebildet sind.

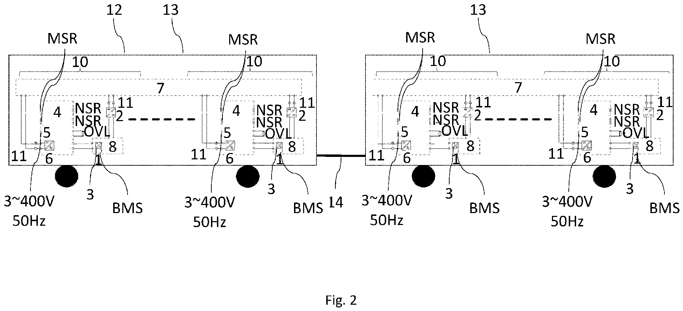

Die Figur 2 zeigt ein Schienenfahrzeug 12 mit zwei Schienenfahrzeugwagen 13. Bei den Schienenfahrzeugwagen 13 handelt es sich jeweils um einen Schienenfahrzeugwagen 13 analog zu dem Schienenfahrzeugwagen 13 aus der Figur 1. In der Figur 2 sind zwei Schienenfahrzeugwagen 13 aus der Figur 1 durch eine Kupplung 14 verbunden. Die Details zu dem jeweiligen Schienenfahrzeugwagen 13 sind der Figur 1 sowie der Figurenbeschreibung zu der Figur 1 zu entnehmen. In diesem Fall besteht das Schienenfahrzeug 12 aus zwei Schienenfahrzeugwagen 13. Es ist jedoch möglich, dass das Schienenfahrzeug 12 aus einer Vielzahl von Schienenfahrzeugwagen 13 besteht. Es ist möglich, dass jeder Schienenfahrzeugwagen 13 mindestens ein Traktionssystem 10 aufweist. Es ist auch möglich, dass in dem Schienenfahrzeug 12 nicht angetriebene Schienenfahrzeugwagen ausgebildet sind. Die nicht angetriebenen Schienenfahrzeugwagen umfassen kein Traktionssystem 10. Es ist möglich, dass die angetriebenen Schienenfahrzeugwagen 13 des Schienenfahrzeugs 12 als Endwagen ausgebildet sind und sich zwischen den als Endwagen ausgebildeten Schienenfahrzeugwagen 13 nicht angetriebene Mittelwagen befinden. Es ist auch möglich, dass die angetriebenen Schienenfahrzeugwagen 13 des Schienenfahrzeugs 12 als Mittelwagen ausgebildet sind und die beiden Endwagen des Schienenfahrzeugs 12 nicht angetrieben sind. Es ist möglich, dass über die Traktionsbatterie 8 und den Fahrzeugspannungswandler 2 sowie das DC-Bordnetz 7 eines Traktionssystems 10 ein Stromrichter 4 eines anderen Traktionssystems 10 auf dem Schienenfahrzeugwagen 13 hochgefahren wird. Dann wird der Stromrichter 4 über den dem Stromrichter 4 des anderen Traktionssystems 10 über das DC-Bordnetz 7 hochgefahren. Es ist auch möglich, dass über die Traktionsbatterie 8 und den Fahrzeugspannungswandler 2 sowie das DC-Bordnetz 7 eines Traktionssystems 10 auf einem Schienenfahrzeugwagen 13 ein Stromrichter 4 eines anderen Traktionssystems 10 auf einem anderen Schienenfahrzeugwagen 13 hochgefahren wird.

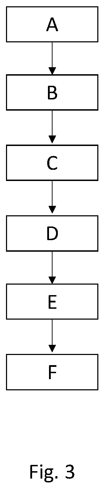

Die Figur 3 zeigt ein Verfahren zum Hochfahren eines Schienenfahrzeuges 12. Das Verfahren umfasst die folgenden Schritte:
- A: Hochfahren des Batteriemanagementsystems 1 und/oder des Fahrzeugspannungswandlers 2 mit bereitgestellter Energie aus der Traktionsbatterie 8, wobei die Energie insbesondere über den Traktionsbatteriespannungswandler 3 bereitgestellt wird,
- B: Versorgen des DC-Bordnetzes 7 mit Energie aus der Traktionsbatterie 8 über den Fahrzeugspannungswandler 2,
- C: Aktivieren des Stromrichters 4 über den Stromrichterspannungswandler 6 aus dem DC-Bordnetz 7,
- D: Nach der Aktivierung des Stromrichters 4, Versorgung des Stromrichters 4 direkt aus der Traktionsbatterie 8 mit Energie, wobei das Bordnetz zwischen der Traktionsbatterie 8 und dem Stromrichter 4 bevorzugt eine Spannung zwischen 700 V und 950 V aufweist,
- E: Versorgen des DC-Bordnetzes 7 mit Energie durch den Stromrichter 4, wenn der Stromrichter 4 aus der Traktionsbatterie 8 mit Energie versorgt wird,
- F: Umschalten des Fahrzeugspannungswandlers 2 auf einen hot-standby-Betrieb, wenn der Stromrichter 4 aus der Traktionsbatterie 8 mit Energie versorgt wird und seinerseits das DC-Bordnetz 7 versorgt. Der Fahrzeugspannungswandler 2 wird dabei, über den Traktionsbatteriespannungswandler 3, aus der Traktionsbatterie 8 versorgt, gibt aber im Normalbetrieb keine Leistung ab.

Es ist möglich, dass einer, mehrere oder alle der Schritte B - E durch ein Batteriemanagementsystem 1 gestartet und/oder durchgeführt werden.

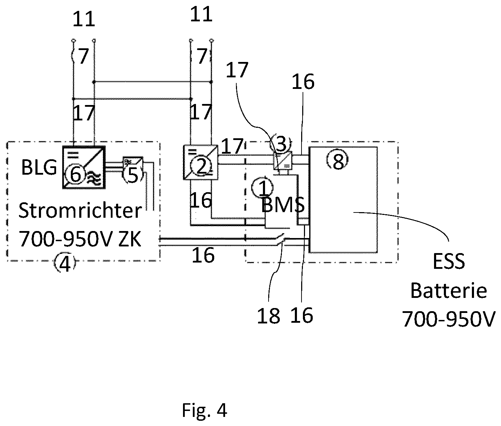

Die Figur 4 zeigt eine Detailabbildung eines Stromrichters 4 sowie einer Traktionsbatterie 8. Die Traktionsbatterie 8 ist elektrisch über ein 700V - 950V-Netz 16 mit dem Stromrichter 4 verbunden. In dem 700V - 950V-Netz 16 zwischen der Traktionsbatterie 8 und dem Stromrichter 4 sind zwei Schalter 18 angeordnet. Die Traktionsbatterie 8 ist über ein 700V - 950V-Netz 16 mit dem Batteriemanagementsystem 1 verbunden. Die Traktionsbatterie 8 ist elektrisch über ein 700V - 950V-Netz 16 mit dem Traktionsbatteriespannungswandler 3 verbunden. Der Traktionsbatteriespannungswandler 3 ist elektrisch jeweils über ein 24V - 110V Netz 17 mit dem Batteriemanagementsystem 1 und mit dem Fahrzeugspannungswandler 2 verbunden. Der Traktionsbatteriespannungswandler 3 wandelt somit die Spannung aus dem 700V - 950V-Netz 16 zu der Spannung in dem 24V - 110V Netz 17. Das Batteriemanagementsystem 1 ist über das 700V - 950V Netz 16 mit dem Fahrzeugspannungswandler 2 verbunden. Der Fahrzeugspannungswandler 2 liefert über das 24V - 110V Netz 17 über den DC-Output 11 elektrische Energie an das DC-Bordnetz 7. Der Fahrzeugspannungswandler 2 ist über das 24V - 110V Netz 17 mit dem Stromrichterspannungswandler 6 des Stromrichters 4 verbunden. Der Stromrichterspannungswandler 6 ist elektrisch mit dem Hilfsbetriebeumrichter 5 verbunden.

Das Hochfahren des Schienenfahrzeugs 12 läuft wie folgt ab: Der Fahrzeugspannungswandler 2 wird von dem Traktionsbatteriespannungswandler 3 mit Energie aus der Traktionsbatterie 8 gestartet. Wenn der Fahrzeugspannungswandler 2 gestartet wurde, wird der Fahrzeugspannungswandler 2 über das Batteriemanagementsystem 1 mit einer 700V - 950V Spannung 16 versorgt. Anschliessend versorgt der Fahrzeugspannungswandler 2 das 24V - 110V Netz 17 zwischen dem Fahrzeugspannungswandler 2 und dem Stromrichter 4 mit elektrischer Energie. Der Stromrichter 4 wird über den Stromrichterspannungswandler 6 mit elektrischer Energie aus dem 24V - 110V Netz 17 von dem Fahrzeugspannungswandler 2 gestartet. Der Stromrichterspannungswandler 6 speist den Hilfsbetriebeumrichter 5 mit dem elektrischen Strom. Nach dem Starten des Stromrichters 4 wird der Stromrichter 4 über das 700V - 950V Netz 16 direkt aus der Traktionsbatterie 8 mit elektrischer Energie versorgt. Die Schalter 18 sind, wenn der Stromrichter 2 gestartet ist, geschlossen.

Das Hochfahren des Schienenfahrzeugs 12 läuft wie folgt ab: Der Fahrzeugspannungswandler 2 wird von dem Traktionsbatteriespannungswandler 3 mit Energie aus der Traktionsbatterie 8 gestartet. Wenn der Fahrzeugspannungswandler 2 gestartet wurde, wird der Fahrzeugspannungswandler 2 über das Batteriemanagementsystem 1 mit einer 700V - 950V Spannung 16 versorgt. Anschliessend versorgt der Fahrzeugspannungswandler 2 das 24V - 110V Netz 17 zwischen dem Fahrzeugspannungswandler 2 und dem Stromrichter 4 mit elektrischer Energie. Der Stromrichter 4 wird über den Stromrichterspannungswandler 6 mit elektrischer Energie aus dem 24V - 110V Netz 17 von dem Fahrzeugspannungswandler 2 gestartet. Der Stromrichterspannungswandler 6 speist den Hilfsbetriebeumrichter 5 mit dem elektrischen Strom. Nach dem Starten des Stromrichters 4 wird der Stromrichter 4 über das 700V - 950V Netz 16 direkt aus der Traktionsbatterie 8 mit elektrischer Energie versorgt. Die Schalter 18 sind, wenn der Stromrichter 2 gestartet ist, geschlossen.

## Patentansprüche

1. Verfahren zum Einschalten eines DC-Bordnetzes (7) eines Schienenfahrzeugs (12) umfassend eine Traktionsbatterie (8) und einen Stromrichter (4), wobei der Stromrichter (4) durch die Traktionsbatterie (8) mit elektrischem Strom versorgbar ist, wobei der Stromrichter (4) durch einen Stromrichterspannungswandler (6) mit einem DC-Bordnetz (7) verbunden istwobei zwischen der Traktionsbatterie (8) und dem DC-Bordnetz (7) ein Fahrzeugspannungswandler (2) angeordnet ist, welcher als DC/DC-Kleinleistungsspannungswandler ausgebildet ist, **dadurch gekennzeichnet, dass** zunächst der Fahrzeugspannungswandler (2) das DC-Bordnetz (7) mit Energie aus der Traktionsbatterie (8) versorgt, bevor der Stromrichter (4) aktiviert wird, wobei der Stromrichter (4) über den Stromrichterspannungswandler (6) aus dem DC-Bordnetz (7) aktiviert wird.

2. Verfahren nach Anspruch 1,
**dadurch gekennzeichnet, dass** das DC-Bordnetz (7) eine Spannung im Bereich von 24-110V aufweist.

3. Verfahren nach einem der vorhergehenden Ansprüche, **dadurch gekennzeichnet, dass** der Stromrichterspannungswandler (6) im Stromrichter (4) integriert ist.

4. Verfahren nach einem der vorhergehenden Ansprüche, **dadurch gekennzeichnet, dass** ein Hilfsbetriebeumrichter (5) mit dem Stromrichter (4) verbunden ist.

5. Verfahren nach einem der vorhergehenden Ansprüche, **dadurch gekennzeichnet, dass** das Schienenfahrzeug (12) SuperCaps umfasst, die so ausgebildet sind, dass durch die SuperCaps Energie im Schienenfahrzeug (12) pufferbar ist, insbesondere für Notfallverbraucher und/oder für Umschaltvorgänge.

6. Verfahren nach einem der vorhergehenden Ansprüche , **dadurch gekennzeichnet, dass** nach Aktivierung des Stromrichters (4) der Stromrichter (4) direkt aus der Traktionsbatterie (8) mit Energie versorgt wird.

7. Verfahren nach Anspruch 6, **dadurch gekennzeichnet, dass** nach der Aktivierung des Stromrichters (4) das DC-Bordnetz (7) über den Stromrichter (4) sowie die Traktionsbatterie (8) mit Energie versorgt wird.

8. Verfahren nach Anspruch 7, **dadurch gekennzeichnet, dass** bei Versorgung des Stromrichters (4) aus der Traktionsbatterie (8) der Fahrzeugspannungswandler (2) in einen hot-standby-Betrieb geschaltet wird.

9. Verfahren nach einem der vorhergehenden Ansprüche, **dadurch gekennzeichnet, dass** ein Batteriemanagementsystem (1) den Einschaltvorgang des Schienenfahrzeuges (12) steuert.

10. Verfahren nach Anspruch 9, **dadurch gekennzeichnet, dass** das Batteriemanagementsystem (1) mit von der Traktionsbatterie (8) bereitgestellten Energie hochgefahren wird.

## Claims

1. Method for switching on a DC on-board power supply system of a rail vehicle (12), comprising a traction battery (8) and a power converter (4), wherein the power converter (4) can be supplied with electrical current by the traction battery (8), wherein the power converter (4) is connected to a DC on-board power supply system (7) by a power converter voltage converter (6), wherein a vehicle voltage converter (2) is arranged between the traction battery (8) and the DC on-board power supply system (7), which is designed as a DC/DC low-power voltage converter, **characterized in that** first the vehicle voltage converter (2) supplies the DC on-board power supply system (7) with energy from the traction battery (8) before the power converter (4) is activated, wherein the power converter (4) is activated via the power converter voltage converter (6) from the DC on-board power supply system (7).

2. Method according to claim 1, **characterized in that** the DC on-board power supply system (7) has a voltage in the range of 24-110V.

3. Method according to one of the preceding claims, **characterized in that** the power converter voltage converter (6) is integrated in the power converter (4).

4. Method according to one of the preceding claims, **characterized in that** an auxiliary converter (5) is connected to the power converter (4).

5. Method according to one of the preceding claims, **characterized in that** the rail vehicle (12) comprises SuperCaps, which are designed such that energy can be buffered in the rail vehicle (12) by the SuperCaps, in particular for emergency consumers and/or for changeover processes.

6. Method according to one of the preceding claims, **characterized in that** after activation of the power converter (4), the power converter (4) is supplied with energy directly from the traction battery (8).

7. Method according to claim 6, **characterized in that** after the activation of the power converter (4), the DC on-board power supply system (7) is supplied with energy via the power converter (4) and the traction battery (8).

8. Method according to claim 7, **characterized in that** when the power converter (4) is supplied from the traction battery (8), the vehicle voltage converter (2) is switched to a hot-standby-mode.

9. Method according to one of the preceding claims, **characterized in that** a battery management system (1) controls the switch-on process of the rail vehicle (12).

10. Method according to claim 9, **characterized in that** the battery management system (1) is started up with energy provided by the traction battery (8).

## Revendications

1. Procédé pour la mise sous tension d'un réseau de bord CC d'un véhicule ferroviaire (12), comprenant une batterie de traction (8) et un convertisseur de puissance (4), dans lequel le convertisseur de puissance (4) peut être alimenté en courant électrique par la batterie de traction (8), dans lequel le convertisseur de puissance (4) est relié à un réseau de bord CC (7) par un convertisseur de tension du convertisseur de puissance (6), dans lequel un convertisseur de tension de véhicule (2) est agencé entre la batterie de traction (8) et le réseau de bord CC (7), lequel est conçu comme un convertisseur de tension DC/DC de faible puissance, **caractérisé en ce que** tout d'abord le convertisseur de tension de véhicule (2) alimente en énergie le réseau de bord CC (7) à partir de la batterie de traction (8), avant que le convertisseur de puissance (4) ne soit activé, le convertisseur de puissance (4) étant activé par l'intermédiaire du convertisseur de tension du convertisseur de puissance (6) à partir du réseau de bord CC (7).

2. Procédé selon la revendication 1, **caractérisé en ce que** le réseau de bord CC (7) présente une tension dans la plage de 24-110V.

3. Procédé selon l'une des revendications précédentes, **caractérisé en ce que** le convertisseur de tension du convertisseur de puissance (6) est intégré dans le convertisseur de puissance (4).

4. Procédé selon l'une des revendications précédentes, **caractérisé en ce qu'**un convertisseur auxiliaire (5) est relié au convertisseur de puissance (4).

5. Procédé selon l'une des revendications précédentes, **caractérisé en ce que** le véhicule ferroviaire (12) comprend des SuperCaps, qui sont conçus de telle sorte que de l'énergie puisse être stockée en tampon dans le véhicule ferroviaire (12) par les SuperCaps, en particulier pour des consommateurs de secours et/ou pour des processus de commutation.

6. Procédé selon l'une des revendications précédentes, **caractérisé en ce qu'**après l'activation du convertisseur de puissance (4), le convertisseur de puissance (4) est alimenté en énergie directement à partir de la batterie de traction (8).

7. Procédé selon la revendication 6, **caractérisé en ce qu'**après l'activation du convertisseur de puissance (4), le réseau de bord CC (7) est alimenté en énergie par l'intermédiaire du convertisseur de puissance (4) ainsi que de la batterie de traction (8).

8. Procédé selon la revendication 7, **caractérisé en ce que** lors de l'alimentation du convertisseur de puissance (4) à partir de la batterie de traction (8), le convertisseur de tension de véhicule (2) est commuté dans un mode de veille active.

9. Procédé selon l'une des revendications précédentes, **caractérisé en ce qu'**un système de gestion de batterie (1) commande le processus de mise sous tension du véhicule ferroviaire (12).

10. Procédé selon la revendication 9, **caractérisé en ce que** le système de gestion de batterie (1) est démarré avec l'énergie fournie par la batterie de traction (8).
